# EUROPEAN PATENT APPLICATION

(11) **EP 3 839 163 A1**
(43) Date of publication of application: **23.06.2021**
(21) Application number: 19290123.9
(22) Date of filing: 19.12.2019
(51) Int. Cl.: E04B 1/94, E04B 9/00, H02G 3/04

(54) **A METHOD FOR ESTABLISHING A FIREWALL**

(71) Applicant: SAINT-GOBAIN ISOVER, 92400 Courbevoie (FR)
(72) Inventor: Pottier, Vincent, 67059 Ludwigshafen (DE); Moreau, Sebastien, 67059 Ludwigshafen (DE)
(74) Representative: Kuhnen & Wacker Patent- und Rechtsanwaltsbüro PartG mbB

(57) **Abstract**

The invention relates to a method for erecting a firewall (1) using at least one panel (4) made of insulating material, comprising the steps of:
a) placing at least two panels (4) to a bulkhead (1a) to form a joint (12) between two adjacent panels (4);
b) at least partially connecting the panels (4) along the joint (12);
in which
c) connecting the panels (4) takes place edge on edge by means of bridge elements (16), wherein the bridge elements (16) are not formed of material of the panels (4).

## Description

The invention relates to a method for establishing a firewall according to the preamble of claim 1. Furthermore, the invention relates to a firewall established according to this method and a vessel having such a firewall.

From the prior art, it is known to establish a bulkhead made of insulating material first in order to form a firewall, for example, in accordance with the B15 standard for vessels. The criteria for the B15 standard are described in the FTP code (fire test procedure code) corresponding to the status of a standard. These insulating panels are formed, for example, of fibers, in particular inorganic mineral fibers, or of other suitable insulating material. Adjacent panels form joints between them. In order to cover these joints, it is known to cover the joint by doubling using panel material, so for example, made of insulating material which forms the panels thus preventing the occurrences of a flame penetration in the area of the joint. Such overlapping bridging of existing joints using panel material or narrow panel cuts is complicated and expensive. In addition, it is material-intensive, especially with regard to the consumed insulating material.

The object of the invention is to provide a method for establishing a firewall which fulfills a B15 standard having a reduced construction effort thus causing lower resulting installation costs. Furthermore, the method should be feasible with simple means and preferably be executed without tools.

This object is achieved by a method having the features of claim 1. Advantageous embodiments are specified in the dependent claims.

Furthermore, it is an object of the invention to provide a firewall, and a related vessel.

These objects are achieved with a firewall having the features of claim 19 as well as with a vessel having the features of claim 20.

A method in accordance with the invention is a method for establishing a firewall using at least one panel made of insulating material, comprising the steps of:
a) placing at least two panels to a bulkhead to form a joint between two adjacent panels;
b) at least partially connecting the panels (4) along the joint;
   wherein
c) connecting the panels takes place edge on edge by means of bridge elements, the bridge elements being provided on both sides of the panels

According to the invention, the method of establishing a firewall is modified from the prior art in that the panels, which essentially form a panel plane, are abutted against each other and bridged by means of bridge elements on both sides of the panels. By "essentially one panel plane" according to the invention is to be understood that the panels are arranged to each other without panel doubling forming approximately a plane. By "forming approximately a plane", it is meant that the extent of such a structure of a plurality of panels is planar and is generally flat, however, with possible deflections or bulges of local as well as of global nature, i.e. over the entire firewall surface. In other words, the joints between adjacent panels are at least partially bridged by the bridge elements on both the one and the other side of the plane formed by the firewall or the panels. Such bridge elements can be manufactured for example as prefabricated smaller and lighter components compared with a doubling panel layer thus saving costs on the one hand and installation effort on the other hand.

In addition, the joint is formed by abutting placement of at least two panels as a zero joint or as a lap joint. According to the invention, a lap joint is, for example, a tongue-and-groove joint, a system of two mutually matching oblique surfaces in the edge area of two adjacent panels or a joint staggered in cross section. Preferably, according to the invention, it is preferred that a marginal panel trimming aligned vertically with the panel plane is formed, which is formed adjacent to a corresponding trimming of the adjacent panel, so that a zero joint is formed, that is a joint with abutting joint adjacent parts. What is essential about a zero joint is that there is no gap between abutting panel parts, through which a flame penetration is visible or otherwise possible. In the sense of the invention, a "lap joint" explicitly does not overlap by panel doubling or at least area-wise panel doubling. This is an overlapping area created with only one panel thickness.

It is particularly preferred to abut the panels against each other, so that abutting end faces of the panels abut against each other without gaps thus forming a so-called zero joint. As a result, a flame penetration through the firewall formed thereby is further reduced or delayed. Alternatively, a solution is conceivable in which the panels are juxtaposed, for example by tongue and groove joints in a gap free manner. Essential to achieve a zero-joint is that a flame penetration, i.e. a presence of a hole in the wall between the panels, is excluded. It can theoretically also be provided to create an overlap by chamfering adjacent panels, which as a result corresponds to such a zero joint in the sense of the invention.

With the method according to the invention, in particular the at least two adjacent panels are abutted in a biased way against each other in a direction perpendicular to the joint plane in the area of the joint (zero joint).

According to this embodiment, the panels or the fiber material forming the panels are slightly compressed in the area of the joints by a biased placement against each other, so that an improved prevention of flame penetration can be achieved. In addition, if necessary manually made inaccuracies of a panel portion can be compensated thereby.

In a particular embodiment, the method according to the invention is characterized in that the at least one bridge element is formed of a metallic material, for example, as a sheet metal strip, perforated metal strip, or is formed of a metal wire.

As a cost-effective way to form the bridge elements it has been shown that a metal material is particularly suitable, in terms of geometric embodiment, it makes sense to form the bridge element as a metal strip, in particular a perforated metal strip or a metal wire. All embodiments are inexpensive to manufacture in large quantities and in particular are usable uniformly in large quantities independently of the position of the joint.

In a further advantageous embodiment, the method according to the invention is developed in such a way that the bridge elements are put on retaining thorns, wherein the retaining thorns each penetrate one of the panels.

This embodiment uses a proven method of fixing insulating panels, which are attached to a support frame to form the firewall as well as to secure/attach the bridge elements in joint areas between two panels.

For attachment of the at least one panel on the support frame in the inventive method it is provided, for example, that the bridge elements are arranged regularly or irregularly alternately on one side of the panels along the joint or the zero joint, and are arranged at regular or irregular intervals on the other side of the panel.

To ensure mechanically highly resilient joint areas between two panels, it is expedient to provide bridge elements on both flat sides of the panels in the joint area and if required, to install them regularly or irregularly alternately spaced along the joint. In this case, regularly alternately means that a regular alternating pattern is implemented between bridge elements on the front side and a rear side of the bulkhead. For example, a bridge element on the other flat side of the panel is arranged between two bridge elements on a flat side of the panels. By irregularly alternately, it is to be understood that, for example, a bridge element on one side is followed by two or more bridge elements on the other side along the joint.

The intervals of the bridge elements on the corresponding flat sides of the panels can be regular or irregular as needed.

In a particular embodiment, a support frame formed as a not full-surface skeleton is provided for fixing the firewall.

A not full-surface skeleton, which serves as a support frame for fixing the firewall, can be established and easily manufactured in a cost-effective and material-friendly manner, for example, from semi-finished products.

In a further particular embodiment, the skeleton is formed at least partially, preferably completely of perforated metal strips and has at least one bottom support and/or a ceiling support, which is fastened to a bottom area and/or a ceiling area abutting the firewall to be established.

Perforated metal strips which may be formed in different thicknesses and widths as a bottom support or ceiling support are particularly suitable for cost-effective construction of the support frame.

Furthermore, it may be advantageous that the retaining thorns are used to fix at least one of the panels on the support frame.

A preferred embodiment of the method according to the invention is characterized in that the retaining thorn is a metal rod, which
a) is firmly bonded to the perforated metal strip or
b) is arranged penetrating the perforated metal strip.

The retaining thorn can be welded to the perforated metal strip of firm bond or can be arranged penetrated it, the latter causing a purely manual work, which can be performed without tools. Only the wire rods must be inserted through the panel of insulating material, so that they can be threaded into a hole of the perforated strip.

A preferred embodiment is characterized in that an at least partially cut free portion of the perforated metal strip is bent out of a plane E of the perforated metal strip to form the retaining thorn.

Alternatively, the retaining thorn may also be a partially cut free portion of the perforated sheet, which is bent out and forms a protruding thin strip suitable for penetrating the insulating panel, which is usually formed as a mineral fiber panel. In such an embodiment, it is particularly advantageous that a cut free portion of a perforated sheet has edge areas protruding at the edge, which can hook into the then plugged-on panels/insulating panels in a particularly effective manner thus ensuring good fixture of these panels.

A further preferred embodiment is characterized in that the panel is fixed on the retaining thorn by means of at least one locking washer or the panel is hooked to corners and/or edges of the bent-out portion.

For a long-term secure mounting of the panels on the retaining thorns, it is possible, for example, to secure the panel by means of many discs which are plugged onto the wire-shaped/rod-shaped retaining thorns and are entangled there. In a likewise preferred manner, the bent-out portions of the perforated strips can already provide sufficient entanglement. But it can also be provided that these areas penetrate the panel and are bent out or twisted at the end thus providing a mounting.

Furthermore, it may be advantageous that the at least one panel is provided with at least one recess for passing objects, such as pipes and the recesses are provided in particular with a slot which leads in particular to a nearest outer edge of the panel, wherein panel portions of the panel in the vicinity of the slot are provided with the bridge elements bridging the slot.

If the plane to be sealed off is penetrated by pipelines or other objects, it is expedient to provide cutouts in the panels, which preferably surround and in particular abut tightly these objects penetrating the plane. In order to mount panels with openings for objects penetrating the firewall plane after the objects, it is expedient to provide the cutouts for the objects in the panels with a slot towards a panel edge, so that the panel can be opened in order to be arranged around the object. In order to close the slots in a fireproof manner, it is expedient to use the bridge elements which - as described above - are used for bridging the joints between two adjacent panels as well as for bridging the slot.

In addition, it may be advantageous that objects which are to penetrate the completed firewall (such as pipelines) are walled by means of panel pieces, and joints/zero joints are connected edge by edge between the panel pieces or between the panels by means of bridge elements.

In another embodiment, it may optionally be advantageous to wall-in the objects, which are to penetrate the completed firewall, in the manner of a wall forming joints with smaller pieces of panel and in the case of non-zero joints to fill them, the joints between these panel pieces being interconnected in a further particular embodiment with bridge elements, as described above. This embodiment is particularly suitable for individual adaptation of the firewall to conditions in narrow or difficult to access areas where it is difficult to be able to mount large contiguous panel pieces in one piece around corresponding objects. The remaining voids between the objects and the panel pieces can be filled with a flexible material. In particular, intumescent foams or so-called stuffed wool are suitable for this purpose.

Pre-bent wire brackets with essentially a U-shape and having free securing legs that are bent out of the U-plane can be used as bridge elements. Such bridge elements are particularly easy to assemble, as they can be pierced into two adjacent panels from one side of the firewall to be established bridging the joint, and a secure connection between two adjacent panels can be established by swiveling the wire brackets after they have penetrated the panels.

In a particular embodiment, the method according to the invention is characterized in that the wire brackets are inserted connecting the panels so that the bridging leg bridges the panel boundary/zero joint on a flat side of the panels and the free securing legs abut on the opposite flat side of the panels.

In addition, it may be advantageous that the wire brackets bridging the joint are inserted regularly or irregularly alternately from the one and the other flat side of the panels along the joint

This measure is used in particular to achieve sufficient dent resistance of the firewall to be established, in case this is made of several panels. In particular, a dent resistance can be achieved in both dent directions.

In a further preferred embodiment, the firewall is established between a cabin ceiling and an upper deck ceiling wall of a vehicle, in particular a vessel, and a refractory adhesive tape is provided at least for connection to the components surrounding the firewall.

With this embodiment, the fire-critical area between a ceiling wall and a cabin and a deck ceiling wall can be sealed off in a particularly simple and flexible manner in accordance with the regulations of the B 15 fire protection class.

Furthermore, it may be advantageous to use insulating panels made of a fiber material as panels, wherein at least one flat side of the panel is formed by a metallic layer, in particular a metallic foil.

According to a second aspect of the present invention, a firewall is established with a method according to the invention.

Another aspect of the present invention relates to a vessel having a firewall which has been established by the method according to the invention.

In the following, the invention will be explained in more detail with reference to the drawings, in which illustrate:
FIG. 1: a firewall with a panel attached to a support frame in a rear view;
FIG. 2: an embodiment of the firewall with a plurality of panels, which form a joint in a front view, wherein an upright is used as a bridge element;
FIG. 3: a detailed view of spring retaining washers for fixing panels to the support frame;
FIG. 4: a front view of a firewall, established by the method according to the invention with a bridge element for connecting two panels;
FIG. 5: a detailed view of a support connection, in particular a connection between a bottom support/ceiling support and an upright of the support frame;
FIG. 6: a view of a perforated metal strip with a retaining thorn formed therefrom;
FIG. 7: a (partial) front view of a firewall in accordance with the invention with a plurality of bridge elements and/or perforated strips;
FIG. 8a: a plurality of bridge elements in embodiments as a wire bracket with push-through legs of various lengths;
FIG. 8b: one of the bridge elements according to FIG. 8a in the inserted state in panels of the firewall in accordance with the invention;
FIG. 8c: a rear view of a portion of a firewall according to the invention in the area of a joint between two panels, which are connected to one of the bridge elements according to FIG. 8a;
FIG. 9a: a firewall established by the method according to the invention in a second embodiment in a front view (still without bridge elements);
FIG. 9b: a firewall established by the method according to the invention in a third embodiment in a front view (still without bridge elements);
FIG. 10a: a firewall established in accordance with the method according to the invention in a fourth embodiment (masonry embodiment) in a front view;
FIG. 10b: the embodiment according to FIG. 10a in an enlarged detail view.

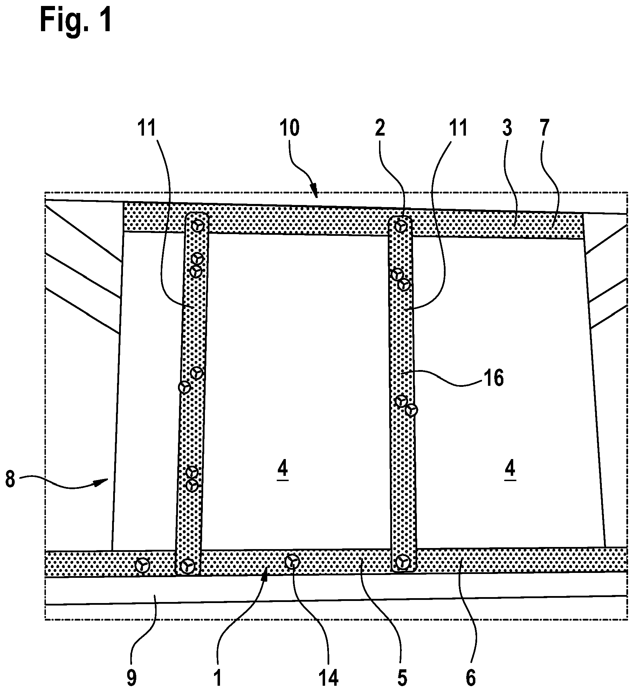

A firewall 1 in one embodiment is shown in FIG. 1 on the basis of a test setup. The view according to FIG. 1 shows a rear view of a support frame 2, which is formed as a not full-surface skeleton 3. On the support frame 2, at least one panel 4 is fixed which forms the flat firewall 1 and is suitably formed for fire inhibition or fire limitation. In particular, such a panel is formed as a mineral fiber board, which has fire protection properties that meet, for example, the classification B15 or other classifications, as needed.

The support frame 2 is formed from perforated metal strips 5 and has a bottom support 6 and a ceiling support 7. The bottom support 6 is connected to a bottom-side boundary of an opening 8 to be sealed off. The ceiling support 7 is connected to a ceiling-side boundary, for example a ceiling of a ship's deck (not shown). The bottom 9 of the opening 8 may, for example, be a ceiling section 10 of a cabin (not shown) of a ship (not shown). The upright 11 is provided for spanning of the free area between the bottom support 6 and the ceiling support 7 in the embodiment of FIG 1. The uprights 11 are also formed as a perforated strip 5. The embodiment according to FIG. 1 shows a construction of two panels 4 whose vertical joint (not visible) is covered by the righthand upright 11 in the view according to FIG 1. Thus, the upright 11 acts as a bridge element 16 for the joint 12. Furthermore, the panels 4 are set edge by edge against each other in a preferred manner, so that a zero-joint, that is a jointless juxtaposition of the panels 4, is ensured.

A zero joint in the sense of the invention can also be achieved by biasing the panels 4 against each other with their end faces abutting the joint 12, so that a jointless juxtaposition of the panels 4 occurs.

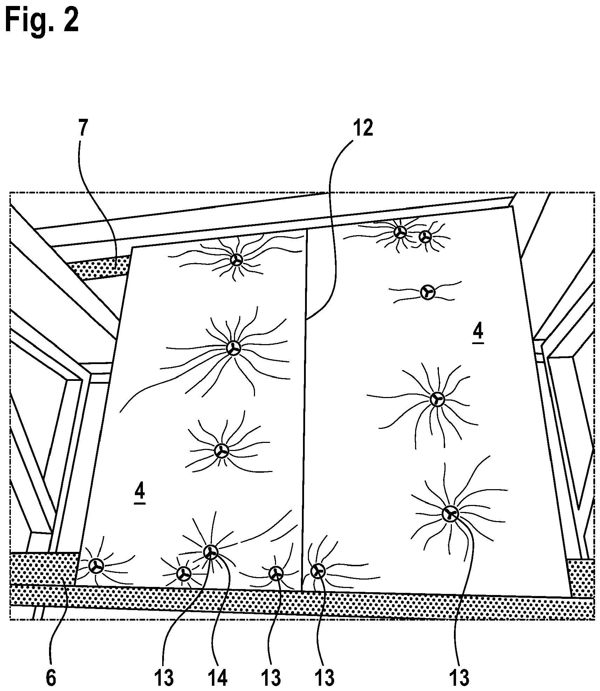

FIG. 2 shows a front view of the embodiment of FIG. 1 with two panels 4, the bottom support 6 and the ceiling support 7. The joint 12, in particular designed as a zero joint is arranged between the two panels 4. The panels 4 are fixed by means of retaining thorns 13 piercing the panel to the bottom support 6, the ceiling support 7 or the upright 11. The retaining thorns 13 are formed, for example, from wire rods having a locking washer 14 on their front and back side, formed respectively as a spring washer, which can be displaced in a grappling manner on the rod-like retaining thorn 13. The retaining thorn 13 penetrates both the panel and a bottom support 6, a ceiling support 7 or one of the uprights 11 in the area of one of the holes of the perforated sheet metal strip 5 forming these parts.

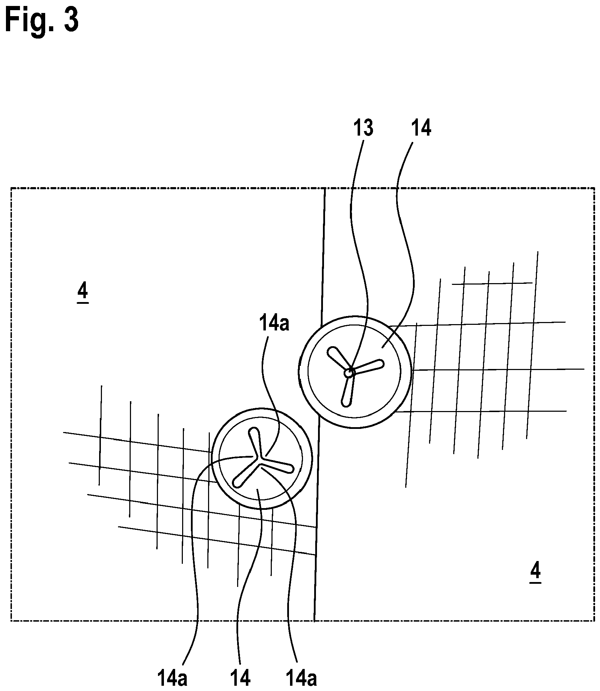

One of the locking washers 14 is shown in FIG. 3 (lower left locking washer 14). This has hooking corners 14a, which after being put onto one of the retaining thorns 13, claw to the outer side of this retaining thorn 13. The locking washer 14 on the right in the illustration of FIG. 3 is attached to one of the retaining thorns 13 and is clawed thereto. This spring washer (safety rail 14) thus supports the panel 4 and holds it against the retaining thorn 13.

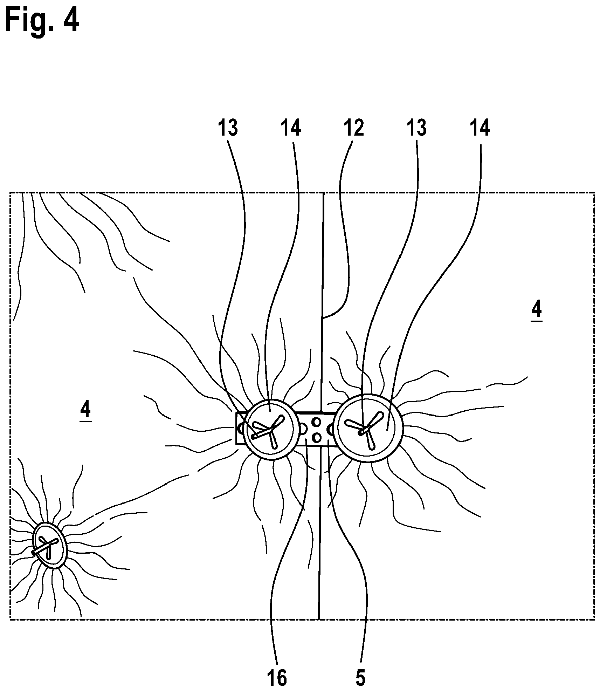

FIG. 4 shows another embodiment of the bridge element 16, which is laid over a joint 12 between two panels 4 and is likewise formed as a perforated sheet metal strip 5. In the same manner as the panels 4 are fixed to uprights 11 or to the bottom supports 6 or the ceiling support 7, the bridge element 6 is also penetrated by retaining thorns 13 onto which the locking washers 14 are pinned.

The retaining thorns 13 in turn pierce thereby the panels 4. On the rear side of the panels 4, not shown in FIG. 4, either only the locking washers 14 can be attached to the retaining thorns or analogously to the formation on the front of FIG. 4 the bridge element 16 may also be provided on the not shown rear side according to FIG. 4, through which the retaining thorns 13 then penetrate.

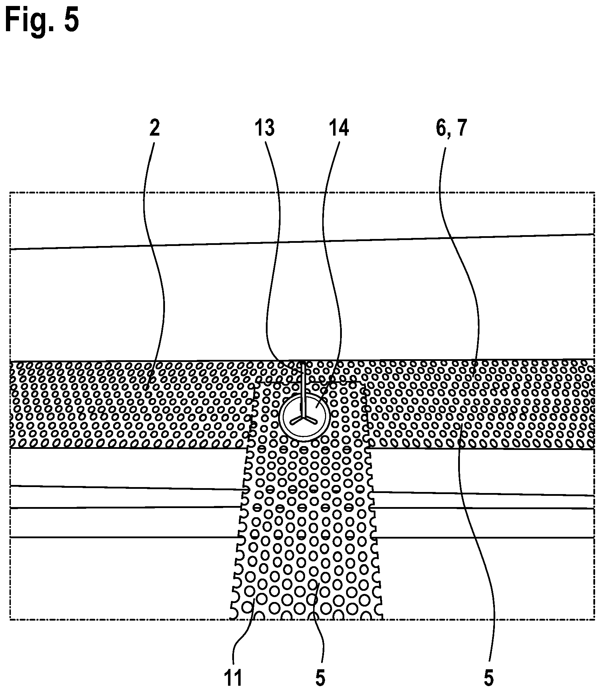

FIG. 5 shows an exemplary connection situation between an upright 11 and a bottom support 6 or a ceiling support 7 of the support frame 2 in an enlarged detail view. In this embodiment, the upright 11 is arranged overlapping with the ceiling support/bottom support 6, 7 and one of the retaining thorns 13 penetrates aligned openings of the ceiling support 7/bottom support 6 and the upright 11. For fixing the retaining thorn 13 with respect to the support frame 2, a locking washer 14 is provided on both, the visible side of FIG. 5 and on the opposing side, locking washers 14 which hold the retaining thorn 13 with respect to the perforated metal strip 5 immovable thus ensuring a connection of the upright 11 with the bottom support 6 or the ceiling support 7 are provided on the invisible back side of this connection point according to FIG. 5.

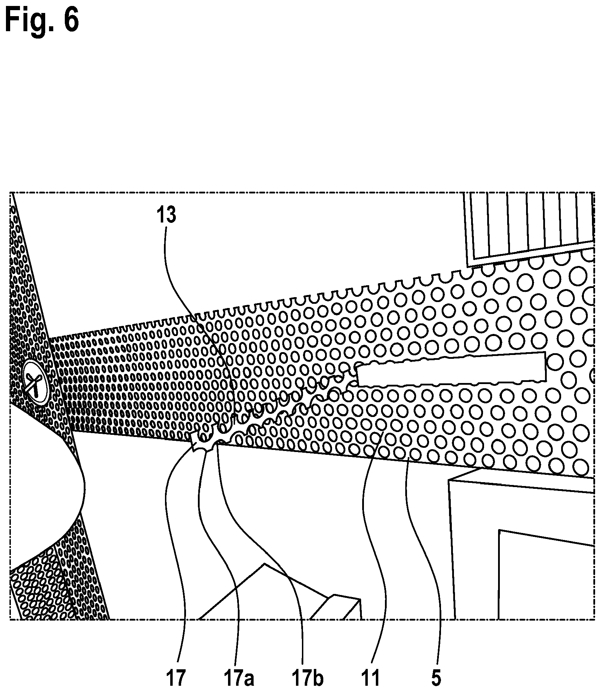

FIG. 6 shows a modified embodiment of an upright 11, which has a cutout portion 17. This cut-out portion 17 is cut out on three sides from the upright 11 and bent out of a plane of the upright 11, so that it forms another embodiment of the retaining thorn 13. In this case, the portion 17 has projecting edges 17a and corners 17b formed thereby, which result from the portion 3 being cut out from the perforated metal strip 5 formed as an upright 11 and holes having been cut through during the separation of the portion 17. These corners 17a and edges 17b are sharp-edged and when penetrating a panel 4 are suitable to hook with the panel 4 which is usually made of insulating material/fibrous material thus ensuring a good fixation within the panel 4 (not shown in FIG. 6).

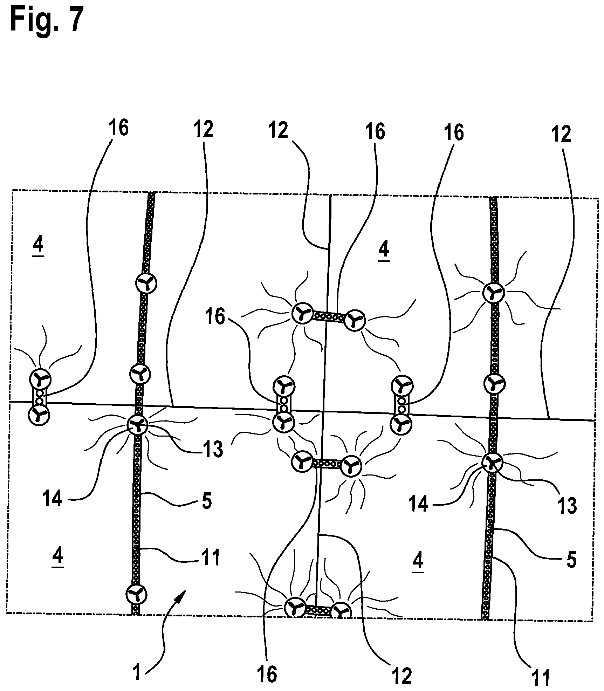

In FIG. 7, a mounting situation of a firewall 1 according to the invention is shown in part, being formed from a total of 4 panels 4, which have joints 12 there between. As described above, the joints 12 are bridged by means of a plurality of bridge elements 16 at regular or irregular intervals from one another along the joint 12. In the embodiment according to FIG. 7, the uprights 11 are formed as narrow perforated sheet strips 5 with only one row of holes and also serve as bridge elements 16 as far as they bridge the joints 12. Along the course of the perforated sheet strips 5, retaining thorns 13 are provided at regular or irregular intervals, which are secured with lock washers 14 in the manner described above. However, of course, the retaining thorns 13, which in the embodiment of FIG. 7 are also formed as wires/rod-shaped metal body, as described above in connection with FIG. 6, may be formed as the protruding portions of, for example, a wider perforated strip 5, which forms, for example, the upright 11 or the bottom support 6 or the ceiling support 7, at least forms part of the support frame 2.

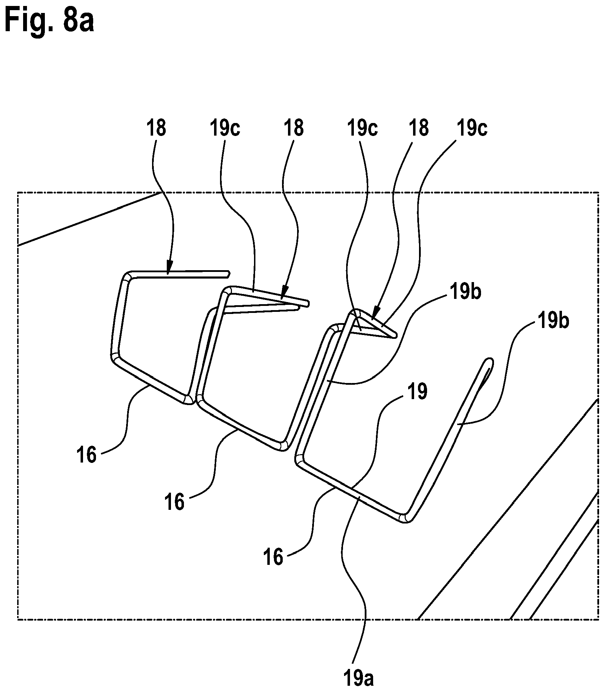

FIG. 8a shows bridge elements 16 in one embodiment as wire brackets 18. The wire brackets 18 are substantially formed U-shaped as a U-profile 19, comprising:
- a bridging leg 19 which in the mounted state (as will be described later) bridges the joints 12,
- two push-through legs 19b, which in the installed state are intended to pierce the panels/insulating panels 4, which form the large surface area of the firewall 1, adjacent to the joints 12,
- securing legs 19c, which are bent out of the plane of the U-profile 19, and which in the installed state of the U-shaped wire brackets 18 abut on a bridging leg 19a opposite the back site of the panel thus preventing falling out of the wire bracket 18.

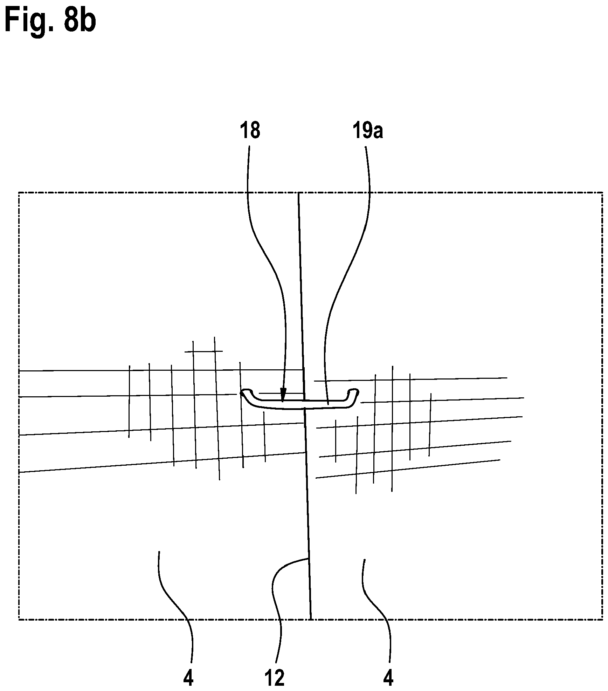

FIG. 8b shows the mounting situation of a bridge element 16 described above in the embodiment as a wire bracket 18, wherein two panels 4 which define a joint 12 there between are interconnected by means of such a wire bracket 18. In FIG. 8b only the bridging leg 19a of the corresponding wire bracket 18 can be seen in the side of the panels 4.

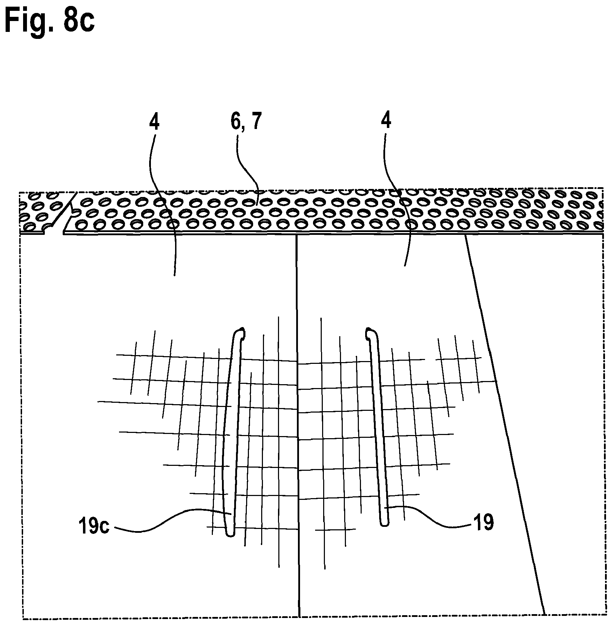

Opposite to the view of FIG. 8b, in the view of FIG. 8c, the securing legs 19c which belong to the bridge element 16 in the form of the wire bracket 18 according to FIG. 8b are visible on the rear site. These abut on the rear site of the two panels 4 and prevent slipping out of the wire bracket 18 during operation.

For orientation one of the edge supports, e.g. the bottom support 6 or the ceiling support 7, is shown at the upper end of the illustration of FIG. 8c. It should be noted that for all embodiments, the bottom support 6 and the ceiling support 7 do not necessarily have to be on the bottom or ceiling side. It may also be the case that the edge supports have additional lateral supports, i.e. left and/or right supports depending on the viewing direction. If required, a frame can be formed from ceiling support, bottom support and right or left side supports (not shown), which can be completed into support frame 2 by means of uprights 11, which can run horizontally and/or vertically and/or diagonally.

Likewise, it is of course possible (for all embodiments) that the support frame 2 has no ceiling support 7 and no bottom support 6 but only the right and left side support, not shown.

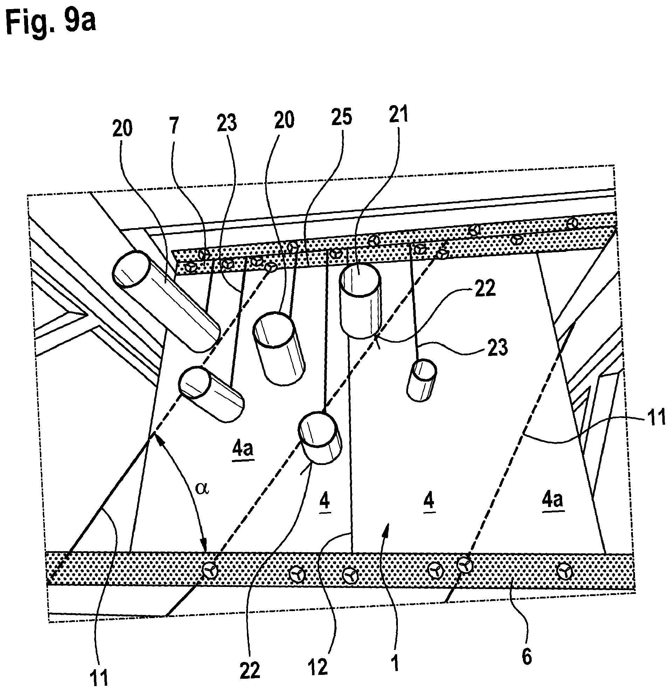

FIG. 9a shows an installation situation of a firewall 1 according to the invention in a second embodiment, the firewall 1 being penetrated by various objects 20, which are represented by pipelines 21 in the illustration according to FIG. 9a. For example, in a space to be sealed off, a plane to be sealed off is penetrated by these objects 20. Thus, for the firewall 1 according to the invention to surround these objects as closely as possible, the firewall has recesses 22 in each of the individual panels 4 which are formed corresponding to the objects 20/pipes 21, and are dimensioned such that the panels 4 abut as closely as possible, i.e. as fire-resistant as possible, to the objects 20 and their outer walls. For a recess 22 to be mounted as firewall 1 in a preassembled object 20/a preassembled pipe 21, each of the recesses 22 in the embodiment of FIG 9a is provided with a slot 23 which extends from the corresponding recess 22 to an outer edge 25 of the panel 4, so that the panels 4 can be mounted around the objects 20 through this slot 23 by entanglement.

In addition, FIG. 9a shows the structure of the firewall 1 between the bottom support 6 and the ceiling support 7, which in the present case are each formed as L-profiles of the perforated sheet strip 5. Furthermore, uprights 11 are provided extending obliquely to the vertical between the bottom support 6 and the ceiling support 7 and being arranged at an angle α toward the bottom support 6 or ceiling support 7. The uprights 11 extend in parallel or approximately in parallel to each other in the embodiment according to FIG. 9a.

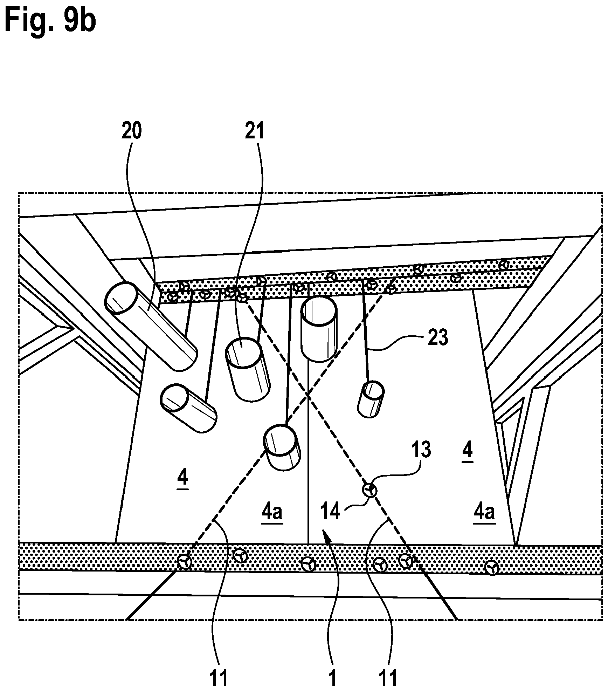

FIG. 9b shows an embodiment of the firewall 1 according to the invention modified with respect to FIG. 9a, wherein, in contrast to the embodiment according to FIG. 9a, at least two uprights 11 are present, which intersect each other extending over the firewall formed by the panels 4. Of course, unlike in the illustration according to FIG. 9b, a plurality of webs 11 may intersect at several points on surfaces which are formed by the panels 4.

In the embodiment of the firewall 1 according to FIGS. 9a, 9b it is advantageous that slitting of the panels 4 by means of the slots 23 which respectively connect the recesses 22 with an outer edge 25, the number of panel pieces 4a corresponds to the number of panels 4 and thus a small amount of individual parts are to be processed.

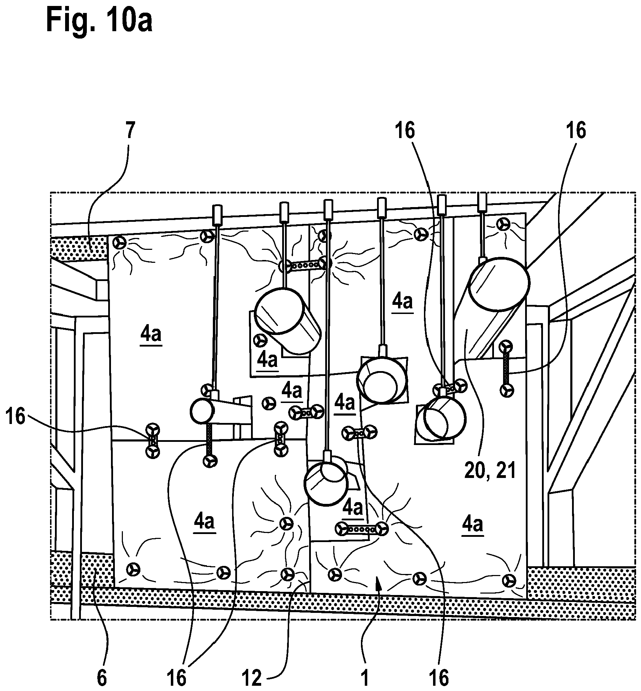

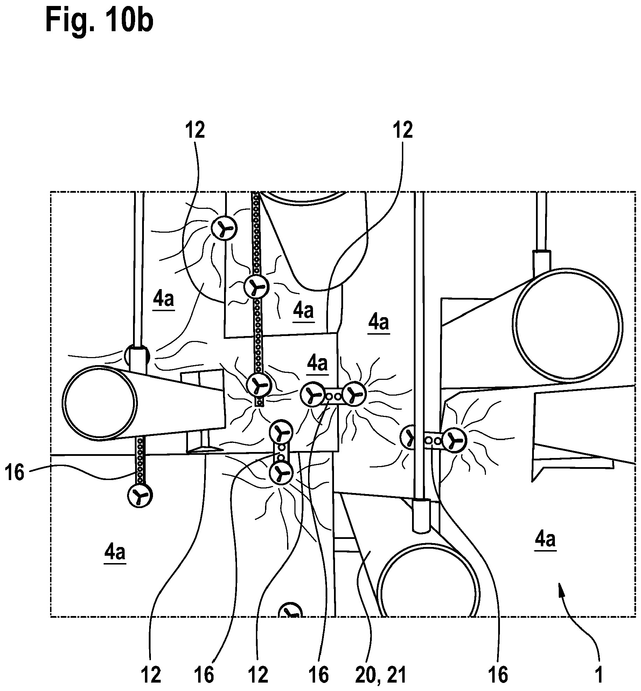

FIGS. 10a, 10b show as an alternative to the embodiment according to FIGS. 9a, 9b an embodiment of the firewall 1 according to the invention, manufactured by the method according to the invention, wherein the firewall 1 is formed by a plurality of panel pieces 4a, which are tailored as needed, so that they can be "bricked around" the piping 21/objects 20.

This method of creating the firewall 1 from a large number of panel pieces 4a has the advantage that small panel pieces 4a can be used to create the firewall 1 around objects 20/pipelines 21 even in cramped environments. For this advantage, it is then accepted that a large number of possibly different panel pieces 4a, which may have to be individually manufactured and tailored, are to be handled.

Furthermore, it is accepted that a plurality of joints 12 (see in particular FIG. 10b) which arise between the panel pieces 4a are to be connected or bridged by a plurality of bridge elements 16, so that the individual panel pieces 4a form an overall firewall which is stable enough to achieve the required stability or dent resistance values.

The remaining voids between the objects and the panel pieces can be filled with a flexible material. In particular, intumescent foams or so-called stuffed wool are suitable for this purpose.

For additional sealing off of the firewall, a fireproof adhesive tape can be provided in edge areas at the connection to the metal structures.

### List of Reference Characters

- 1: firewall
- 2: support frame
- 3: skeleton
- 4: panel
- 4a: panel pieces
- 5: perforated metal strips
- 6: bottom support
- 7: ceiling support
- 8: opening
- 9: bottom portion
- 10: ceiling area
- 11: upright
- 12: joint/zero-joint
- 13: retaining thorn
- 14: locking washer
- 15: profile
- 16: bridge element
- 17: portion
- 17a: edge
- 17b: corner
- 18: wire bracket
- 19: U-profile
- 19a: bridging leg
- 19b: push-through leg
- 19c: securing legs
- 20: objects
- 21: pipelines
- 22: recess
- 23: slot
- 25: outer edge

## Claims

1. A method for establishing a firewall (1) using at least one panel (4) made of insulating material, comprising the steps of:
a) placing at least two panels (4) to a bulkhead (1a) to form a joint (12) between two adjacent panels (4);
b) at least partially connecting the panels (4) along the joint (12); **characterized in that**
c) connecting the panels (4) takes place edge on edge by means of bridge elements (16), the bridge elements (16) being provided on both sides of the panels (4) and the joint (12) being formed by abutting at least two panels (4) as a zero joint (12) or lap joint.

2. The method according to claim 1, **characterized in that** the at least two adjacent panels (4) are placed in a biased way against each other in a direction perpendicular to the joint plane in the area of the joint (12) (zero joint).

3. The method according to claim 1 or 2, **characterized in that** the at least one bridge element (16) is formed of a metallic material, for example, as a sheet metal strip, perforated metal strip (5), or is formed of a metal wire, in particular wherein the bridge elements (16) are put on retaining thorns (13), wherein the retaining thorns (13) each penetrate one of the panels (4).

4. The method according to claim 3, **characterized in that** the bridge elements (16) are arranged regularly or irregularly alternately on one side of the panels (4) along the joint (12) or the zero joint, and are arranged at regular or irregular intervals on the other side of the panel (4).

5. The method according to one or more of the preceding claims, **characterized in that** a support frame (2) formed as not full-surface skeleton (3) is provided for fixing the firewall (1), in particular wherein the skeleton (3) is formed at least partially, preferably completely of perforated metal strips (5) and has at least one bottom support (6) and/or a ceiling support (7), which is fastened to a bottom area (9) and/or a ceiling area (10) adjoining the firewall (1) to be established.

6. The method according to one or more of the preceding claims, **characterized in that** the retaining thorns (13) are used to fix at least one of the panels (4) on the support frame (2).

7. The method according to one or more of the preceding claims, **characterized in that** the retaining thorn (13) is a metal rod, which
a) is firmly bonded to the perforated metal strip (5) or
b) is arranged penetrating the perforated metal strip (5).

8. The method according to one or more of the preceding claims, **characterized in that** an at least partially cut free portion (17) of the perforated metal strip (5) is bent out of a plane E of the perforated metal strip (5) to form the retaining thorn (13).

9. The method according to one or more of the preceding claims, **characterized in that** the panel (4) is fixed on the retaining thorn (13) by means of at least one locking washer (14) or the panel (4) is hooked to corners (17b) and/or edges (17a) of the bent-out portion (17).

10. The method according to one or more of the preceding claims, **characterized in that** the at least one panel (4) is provided with at least one recess (22) for passing objects (20), such as pipes (21), and the recesses (22) are provided in particular with a slot (23) which leads in particular to a nearest outer edge (25) of the panel (4), wherein panel portions of the panel (4) in the vicinity of the slot (23) are provided with the bridge elements (16) bridging the slot (23).

11. The method according to one or more of the preceding claims, **characterized in that** objects (20), which are to penetrate the completed firewall (1) (such as pipes (21)) are walled by means of panel pieces (4a) and in the case of formation of non-zero joints these are filled, with joints/zero joints (12) being interconnected edge by edge between the panel pieces (4a) or between the panels (4) by means of bridge elements (16).

12. The method according to one or more of the preceding claims, **characterized in that** wire brackets (18) being formed in particular U-shaped with a bridging leg (19a) and two push-through-legs (19b) and having free securing legs (19c) being bent out of a U-plane are used as bridge elements (16), in particular wherein that the wire brackets (18) are inserted connecting the panels (4) so that the bridging leg (19a) bridges the panel boundary/zero joint (12) on a flat side of the panels (4) and the free securing legs (19c) abut on the opposite flat side of the panels (4).

13. The method according to one or more of the preceding claims, **characterized in that** the wire brackets (18) bridging the joint (12) are inserted regularly or irregularly alternately from the one and the other flat side of the panels (4) along the joint (12).

14. The method according to one or more of the preceding claims, **characterized in that** the firewall (1) is established between a cabin ceiling and an upper deck ceiling wall of a vehicle, in particular a vessel, and a refractory adhesive tape is provided at least for connection to the components surrounding the firewall.

15. The method according to one or more of the preceding claims, **characterized in that** insulating panels made of a fiber material are used as panels (4), wherein at least one flat side of the panel (4) is formed by a metallic layer, in particular a metallic foil.
